# EUROPEAN PATENT APPLICATION

(11) **EP 1 605 384 A1**
(43) Date of publication of application: **14.12.2005**
(21) Application number: 05252869.2
(22) Date of filing: 10.05.2005
(51) Int. Cl.: G06F 17/60

(54) **Price display in an anonymous trading system**

(30) Priority: 11.05.2004 US 570424 P
(71) Applicant: EBS Group limited, London EC4M 7LS (GB)
(72) Inventor: Krishnasami, Srivathsan, New York, NY 10128 (US); Sinclair, James Henry, New York, NY 10023 (US)
(74) Representative: Lloyd, Patrick Alexander Desmond

(57) **Abstract**

An anonymous trading system comprises an interconnected network of broking nodes arranged in cliques which receive buy and sell orders from trader terminals via connected trading engines and which match persistent orders, executed deals and distribute price information to trader terminals. The system has the ability for a trader to call out for a quote (request for a quote) anonymously. RFQs are only transmitted on to potential counterparties if they are within a predetermined price range. The RFQs include a price at which the requesting party is willing to deal, but this price is not communicated potential counterparties. Counterparty responses are matches on a time, price basis and non-matched responses may be matched with themselves. Similarly, non-matched RFQs may be matched with each other.

## Description

### TECHNICAL FIELD

The present invention relates to electronic trading systems for trading, for example, financial instruments such as spot FX or precious metals, and other financial instruments including but not limited to FRAs interest rate swaps, money, markets, options, metals, call money, government bonds and other short term interest rate instruments. In particular, the invention relates to a computerised trading system having a plurality of order input devices connected to a network for submission of and matching by the system of quotes (bids, offers), with hits (buy and sell) orders.

### BACKGROUND TO THE INVENTION

An anonymous trading system is described, for example, in EP-A-0,399,850, EP-A-0,406,026 and EP-A-0,411,748 each of which discloses an automated matching system for anonymous trading of foreign currencies (or other financial instruments). In this system, a single host computer maintains a central database of all trading instruments available for trade, credit information and bids and offers which have been submitted by terminals connected to the host via a computer network. The host computer uses information in its central database to match bids and offers and buy and sell orders based on matching criteria which include a counter party credit limit.

The counter party credit limits are set at each trading floor, and are stored at the host computer, which then establishes a gross counter party credit limit for each possible pair of counter-parties. The gross counter party credit limit is the minimum amount of the remaining credit from a first party to a second party, and the second party to the first party. The various trader terminals connected to the host computer maintain and display only a restricted subset of the information available at the host computer, such as best bids and offers.

A problem was identified with this system in that the host computer only used the credit information to check that a deal could proceed after a potential match had been identified. A trader thus could not know whether he had credit with a potential counter party prior to attempting to trade. This problem was identified and a solution provided in the system disclosed in US-A-5,375,055.

In the system disclosed in US-A-5,375,055 a credit matrix is derived and stored at a plurality of regional nodes of a distributed network, with each regional node distributing market information to a set of trader terminals to which the regional node is connected via an access node. The regional node is known as a Market Distributor and provides dealable price information to the trader terminals connected via the access node known as a Market Access Node. The actual matching of bids, offers, buy and sell commands is provided by separate nodes known as Arbitrators.

Traders do not always wish to make a quote (either a bid or offer) which would commit to a deal if hit by another trader, but may wish to explore the possibility of a deal by requesting other traders to make quotes. In direct dealing environments, whether conducted by telephone or direct dealing screen based systems such as EBS Direct provided by EBS Group Ltd of London UK, a trader can request a quote (e.g. I want a price for 100 Euro/USD) from potential counterparties. These potential counterparties may then choose to "make" prices.

Direct dealing systems are not anonymous and we have appreciated that if any attempt were made to integrate direct dealing systems with anonymous systems, simply allowing traders to input requests for quotes (RFQs) without control could substantially increase the number of messages transmitted in an anonymous computer trading system, unnecessarily using bandwidth but without providing any increase in speed of matching orders. We have appreciated, therefore, that it is preferable to limit the manner in which requests for quotes are made in an anonymous computer trading system. From a market point of view, as well as a technical point of view, unfettered submission of RFQs is undesirable as unscrupulous traders can submit RFQs to the market to find out what prices other parties are prepared to offer, and then withdraw the RFQ. Such behaviour would severely damage the integrity of the system as a trading system and prejudice traders from replying to RFQs.

### SUMMARY OF THE INVENTION

Broadly, the invention provides a computer trading system for trading instruments in which traders may input requests for quotes which are distributed anonymously to trader terminals, but which must meet certain criteria. The criteria tackle both a business problem of preventing traders from repeatedly requesting quotes from others to determine market trends and also a technical problem of avoiding unnecessary messages in an anonymous trading system which has a finite capacity, which could degrade system performance.

The invention is defined in the independent claims to which reference is directed. Preferred features are set out in the dependent claims.

### BRIEF DESCRIPTION OF THE DRAWINGS

An embodiment of the invention will now be described, by way of example only, and with reference to the accompanying figures in which:
- Figure 1: is an overview of a first trading system architecture suitable for embodying the invention;
- Figure 2: is an overview of a second trading system architecture suitable for embodying the invention;
- Figure 3: is a schematic diagram showing the messages sent and displayed in a first aspect of the invention;
- Figure 4: is a flow chart illustrating the message flow in figure 3;
- Figure 5: is a schematic diagram showing the messages sent and displayed in a second aspect of the invention;

- Figure 6: is a schematic diagram showing the messages sent and displayed in a third aspect of the invention;
- Figure 7: is a flow chart illustrating the message flow in figure 6;
- Figure 8: is a schematic diagram showing the messages sent and displayed in a fourth aspect of the invention; and
- Figure 9: is a flow chart illustrating the message flow in figure 8.

### DESCRIPTION OF PREFERRED EMBODIMENTS

The purpose of systems embodying the various aspects of the invention is to allow parties to enter quotes and orders, which are then matched within the system. The system provides a platform for trading tradable products such as commodities and financial instruments including at least the following: FX Spot, FRAs, Forwards and also FX Forwards, CFDs, short-dated government and/or central bank paper, commercial bills, CDs, inter-bank deposits, commercial paper, reports, interest-rate futures, swaps, options, commodities such as metals and a miscellany of tailor-made variants on these basic products. These are all referred to as financial instruments.

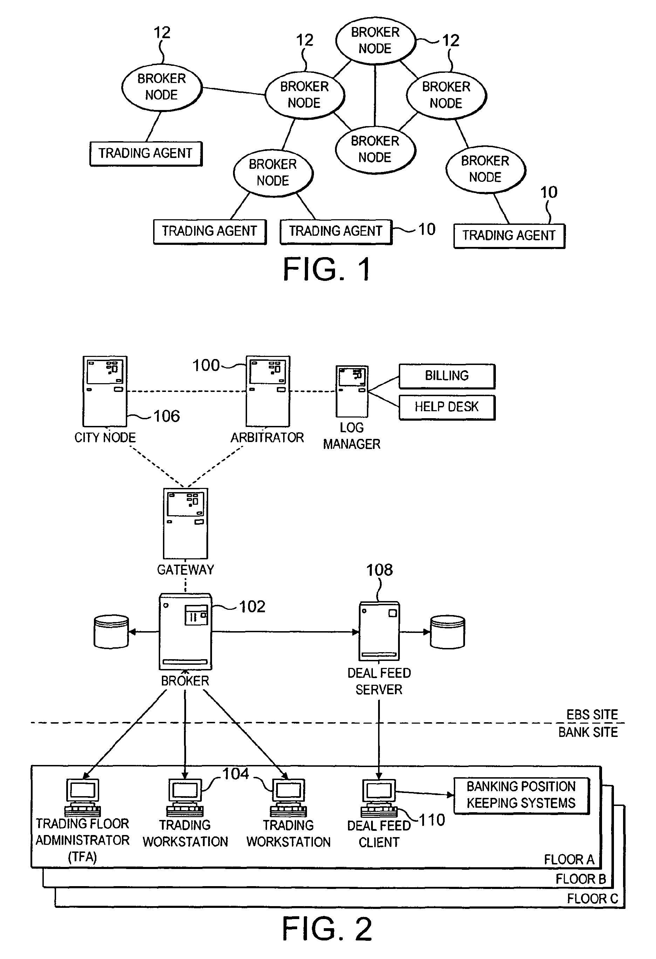

Input interfaces submit quotes and hits which are then passed on to third parties via a computer network. The particular architecture of the trading system is not important although the arrangement of a plurality of broker nodes shown in figure 1 or the combination of broker nodes and arbitrators shown in figure 2 is presently preferred. The various aspects of the invention may equally be implemented using a host based system such as is disclosed in EP-A-0,399,850, or the distributed system of US-A-5,375,055 also referred to above

It is noted, for the avoidance of doubt, that the input interface may be an interface to another computer system by which quotes and hits are automatically submitted, or may be a trader terminal by which a trader may initiate quotes and responses. Thus, the system may be used with order input devices that are trader terminals from which human traders interface with the system, or order input devices which are automated trading interfaces which may run computer controlled trading algorithms which trade in the market in response to market conditions.

A quote is an instruction to bid or offer submitted by a trader to "make a market" and is distributed to others as a quote message and shown as part of a market view. Quotes are thus visible orders as they are visible to others in the sense that the price and amount are communicated and so available or displayed to either all or a group of other parties. A hit or take order is a buy or sell instruction submitted at an input interface by a party wishing to create a deal on the basis of a price displayed on his market view derived from one or more quotes. Hit/take orders are transmitted as order messages to the other party originating the corresponding quote message, but are not distributed as part of the market price.

A hit/take order does not remain in the system; if it cannot be dealt with when entered, it is removed. For this reason they are sometimes known as fill or kill orders. Hits are therefore orders that are invisible to other trading parties on the system in the sense that only the counterparty to the trade receives the order message. An Order Book is a list of all the available visible orders in the market. Since the Quotes are the only available orders, the book consists of a list of Quotes. The Quotes are arranged in a queue in the correct dealing order. The sort order of the queue may vary for different trading instruments. The default sort order is by price and time. In the system of figure 1, each Broker node maintains a complete list of all available quotes.

As mentioned above, the architecture of the system is not important although a distributed architecture is preferred with the system functionality distributed as will now be described with respect of Figures 1 and 2.

The computer trading network 14 embodying the invention of Figure 1 comprises a plurality of trading agents 10 each connected to at least one of a plurality of broker nodes 12. Each trading agent is a network component and is the means by which the trader terminals access the trading system. The trading agents may be separate components or their functionality may be integrated into the broker nodes. In figure 1 they are shown as separate components but this is purely exemplary. Order input devices(not shown) may be workstations or other computer terminals configured to submit quotes and orders, for example manually by a trader through use of a specialized key pad, or automatically though execution of a trading algorithm by a computer. Order input devices also receive market data, including price and amount available, for financial instruments to be traded. Where the order input devices are trader terminals this market data is displayed to the trader on the workstation display. In the case of automated trading interfaces, the data is provided to the interface. It may be displayed for the convenience of a party responsible for monitoring operation of the trading interface. Order input devices are typically grouped as part of a financial institution, such as a bank, which arranges traders as part of a trading floor. A trading floor is a group of order input devices under common control of a trading floor administrator who allocates credit lines for the trading floor against other trading floors. The trading floor may comprise a one or more physical traders each having a trading workstation, and/or one or more automated trading interfaces running a trading algorithm. The market view for a trader, or group of traders, is the market information (price, volume, etc.) that the traders can see that reflect the market. The market views are preferably pre-screened for credit compatibility so that the only orders that are presented to the order input device are from counterparties with whom the trading floor has credit.

The embodying system is preferably an anonymous trading system in which the market views produced by the brokers comprise price and amount information without identifying the source of the price. The prices displayed for available bids and offers and the amounts available at those prices are thus aggregates of one or more quotes. Only the quotes of parties satisfying the pre-screen credit criteria are included in the aggregate price displayed. The market views produced by the broker nodes thus differ from one trading floor to another depending on the credit allocation.

The trading agent node provides services to a specific trading floor or group of traders. These services include providing access to the network for each trading work station, completing deals, producing deal tickets and maintaining historical dealing information for traders. Each trading agent node must connect to at least one broker node to access the trading system. A group of trader terminals thus connects to a trading agent 10 to access the system.

Each Broker node 12 provides the basic order matching and price distribution services. The Broker nodes are arranged clique tree structure, which enables fast communications routing, following very specific but simple rules. The clique tree is a network structure where individual nodes are grouped into cliques, and the cliques are then arranged into a tree structure. Each Broker can be linked logically to a number of Brokers, which are referred to as its neighbor Brokers. Communication between Brokers is on an equal level, with no "up" or "down" direction in the network.

While Trading Agents must be connected to at least one Broker node, they themselves are not members of the Clique Tree, but remain outside the structure. A Trading Agent connected to multiple Broker nodes will receive multiple sets of market prices. Even though the price information from different Broker nodes can be substantially the same, the information may be received at different intervals. A Trading Agent will send a given trading order to only one Broker node.

The term Broker node is used to describe a computer arranged as a physical or logical node in a computer network providing a broking function. The basic broking function is the storing of quotes, providing the quotes to traders in the form of a market view and matching quotes and orders. The Broker nodes in the described embodiment also perform further functions, but these are not essential features of what is defined as a Broker node. It should be remembered that the broker nodes may also incorporate the functionality of the trading agents.

The Broker nodes are equal to each other, and perform the same functions. The arrangement of the network or their position in it is transparent to the broker nodes. They only need to know about their neighbours. Each Broker node has: knowledge of all orders in the market, and is able to match orders as soon as they are submitted. As a consequence of the fact that each Broker node maintains a full list of orders in the market, it is therefore able to customize market views as needed by the Trading Agents and is able to react faster to market information as soon as it is received.

Figure 2 shows an alternative architecture which is a hybrid to that described with respect to figure 1 and the distributed architecture disclosed in US-A-5,375,055. In the figure 2 embodiment, matching of quotes remains the responsibility of arbitrators 100 which perform the same functions as the arbitrators of US-A-5,375,055. The broker node 102 essentially performs the function of the broker node and trading agent of figure 1 although it will be appreciated that the architecture does not use a network of brokers having equal standing in the network. Thus, in figure 2, the broker nodes perform the functions of price distribution, order/hit submission, deal status and notification, trader profile information and notifications, the storage of credit information in the form of a credit matrix, and settlement instructions. The broker nodes communicate directly with the order input devices, shown as trading workstations 104. These may be physical traders and/or automated trading interfaces. A trading floor administrator is also shown coupled to the broking node. The figure 2 embodiment also includes a city node 106 which sits between the brokers and the arbitrators. A deal feed server 108 is attached to the broker node 102 and communicates with a deal feed client 110 at the trading floor. The deal feed client server mechanism is used to communicate details of completed deals to trading floors to produce deal tickets through which the parties to deals reconcile their positions with respect to one another.

Embodiments of the invention allow order input devices such as traders to enter requests for quotes (RFQs) at that are distributed to, and communicated to other order input devices in the system as request for quote (RFQ) messages. In the case of trader terminals operated by physical traders, these messages will be displayed to the traders on the screen of the trader workstation. In contrast to the display of quotes which are aggregated and all amounts available at a particular price displayed together, RFQs are displayed as amounts only. The responder to an RFQ may then propose a price for the amount requested in a response transmitted as a response message. The example described is for foreign exchange dealing, in which quotes comprise an amount of currency and a price (either a bid or offer price). The quote submitted in response to an RFQ is termed a "response" and is transmitted as a "response message". This differs from a "quote" in that the response is initially sent only to the party that submitted the RFQ for display.

Embodiments of the invention in its various aspects provides mechanisms to prevent RFQs being submitted to the system, which would stand little realistic chance of resulting in a match with a counterparty quote. This addresses the technical problem of preventing unnecessary message flows throughout the system, which would use bandwidth, and also the business problem of preventing traders entering RFQs with no intention of dealing to test the market. Further mechanisms prevent multiple response messages from being transmitted which fail to match the RFQ to which the responses were transmitted. This is achieved by a new matching process for response messages.

A first mechanism prevents RFQs specifying a price outside a market range from being transmitted as RFQ messages. By requiring input interfaces (either traders at trader terminals or direct computer price feeds) wishing to enter RFQs to enter a price and by filtering based on that price, only RFQs with a realistic chance of matching are transmitted. Other mechanisms relate to the automatic matching of an RFQ with responses or with other RFQs. All such mechanisms aim to conclude a match with a minimum number of messages; if a party has submitted an RFQ which matches with another party, a deal is done. All these mechanisms may be used alone or in conjunction with one another. A party which submits an RFQ is committed to a deal if the systems finds a match.

The embodiment of the invention may operate on the same platform as an existing spot FX broking system so that actions in relation to RFQs can result in quotes being transmitted to the spot FX broking system. Thus, embodiments of the invention may operate on the EBS anonymous trading system provided by EBS Group Limited.

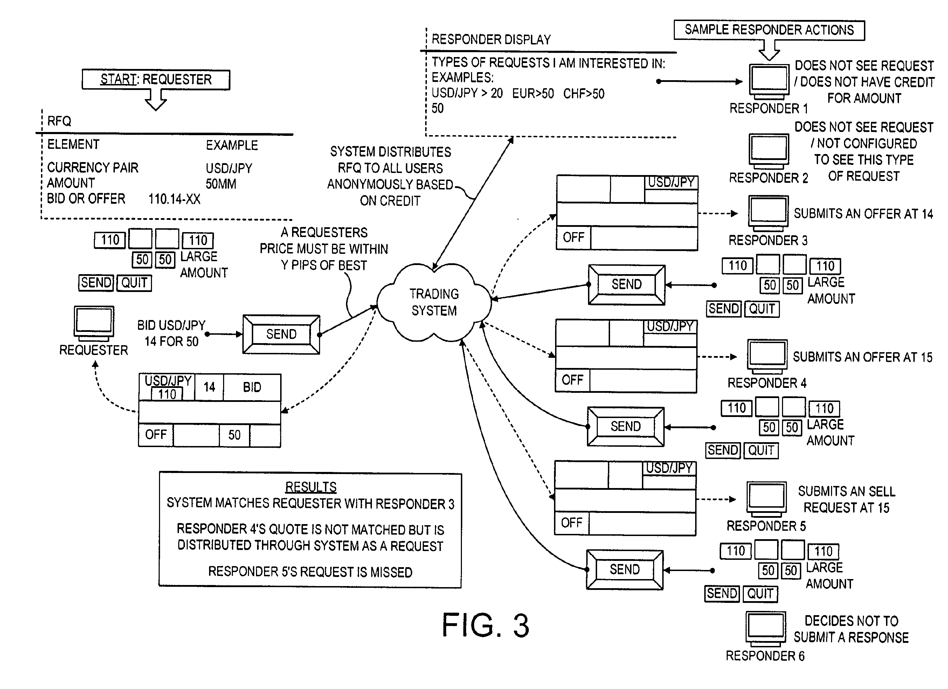

An example of a first mechanism in an embodiment of the invention is shown in Figure 3, and preferably comprises the system shown and described in relation to Figure 1 or 2, here shown schematically only. For the avoidance of doubt, any other anonymous trading architecture could be used. The remainder of the figure shows the display at trader terminals and message flow between terminals. The process of submitting a request for a quote (RFQ) starts with an order input device at a first terminal 16 (requester) submitting a request for a quote for an amount and a specified currency pair. The RFQ information is shown at 20 and is entered using a keyboard at the requester trader terminal 16 into a "deal panel" which is a graphical representation of the entered RFQ data. In addition to the currency pair and amount, a bid or offer price is entered. Unlike a quote, however, this price is not displayed to other traders and remains invisible. Only the currency pair and amount are displayed to other traders who may decide to submit a quote in response. The system is constrained, however, so that a price must be entered for the RFQ to be transmitted.

In the example shown, the RFQ submitted into the deal panel is shown summarised as USD/JPY 14 for 50 meaning request to buy 50 million (50M) USD worth of Japanese Yen (JPY). The requester specifies a price at which they would be willing to deal, here 110.14 as a bid (summarised as 14), and no price is entered as an offer. In practice, a trader may choose to enter both bid and offer prices. The fact that only a bid price is entered means the requester only wishes to buy (not to sell). The entering of a price represents a commitment on the part of the requester to deal at the stated price or better.

The RFQ is submitted to the system 14 as RFQ message 24. The price indicated is then analysed to see whether it is within a given range. In particular, the requester's price must be within a given number of units of a system defined price, such as the system "best" or some other market indications such as a derived "benchmark" price. The benchmark may be derived from various predictive data, including historical prices, volumes and other calculations. If the price is outside this range, then the RFQ message 24 is rejected and the requester notified accordingly. This prevents traders entering spurious RFQs without any intention to trade, safe in the knowledge that no counterparty will instigate a trade.

A system defined price such as the "best" is the price for the given financial instrument at which the instrument is generally available within the system. In the system of figure 1 this is derived by the broker nodes 12 and is available throughout the system 14 distributed via the broker nodes to trading agents and input interfaces. The algorithm to verify that the submitted price is within a given range of the best price is a straightforward comparison function performed either at the input interface or the trading agent 10 that first receives the RFQ message. In the architecture of figure 2, the best price is derived by a combination of the broker nodes and the arbitrators. It is noted, by way of explanation, that an RFQ must include a price (even though the request itself represents a request for others to provide a price) for the comparison function to be performed. The price specified in the RFQ message is also needed for other matching reasons described later.

If the price specified in the RFQ message 24 is within the required range, then it is then anonymously distributed to other trader terminals (shown as potential responders) 18 with whom the requester trader has sufficient credit on a bilateral basis. Thus, only the trader terminals 18 that are able to deal with the requester receive and display the RFQ. An alternative would be for RFQs to be distributed irrespective of credit, although this is not preferred.

Each potential responder has a number of options for response. The RFQ is a request for responders to submit quotes. An offer could be submitted which could potentially match with the RFQ. In the example of Figure 3 responders 3 and 4 at terminals 18 decide to submit offers at slightly different prices (responder 3 offers at 14, responder 4 offers at 15). These are transmitted to the system 14 as response messages 26. A bid (sell) could be submitted as shown by responder 5 (sell at 15) at terminal 18 that is also transmitted to the system 14 as a response message 26. Lastly, of course, the potential responder could choose not to respond as shown by responder 6.

Any response messages are received in the system and are attempted to match against the RFQ. If a match is found based on amount (the response must be a price for the amount requested in this example), price and bilateral credit between the parties, then a deal is done. In this example, the RFQ is matched with the quote of responder 3.

The matching operation is based upon time then price priority (the amount being defined in the RFQ and responders must match this amount). In general, a responder must respond with an order for the amount specified in the RFQ. If a responder provides an order that can match the RFQ because it is for the correct side (e.g. an RFQ on the bid side matches an offer or sell) and for a better amount, then a match is done. In the example of Figure 3, responder 3 submits an offer at a price "14" (meaning 110.14). As this is on the correct side, for the correct amount and for the same price a match is made and the RFQ and response offer are removed from the market.

The offer submitted by responder 4 in this example, is not matched with the RFQ, because it was submitted after responder 3. Instead, a "response match" process is undertaken to determine whether the responses submitted in response to the RFQ can be matched with any other orders.

Responder 5 chose to submit a sell request. This also did not match the RFQ, because a match had already been done. The sell request is not acted upon further and is removed from the market.

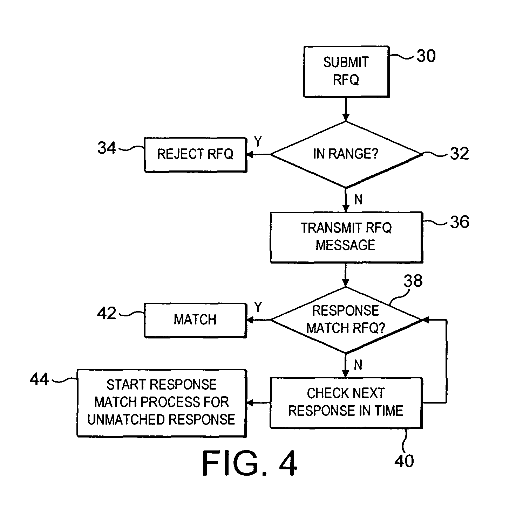

The process involved in the aspect shown in Figure 3 is shown further in the flow diagram of Figure 4. At a first step 30 an RFQ is submitted at a trader terminal. The system checks to ensure that the price specified in the RFQ is within a given range of the system defined price at step 32. If so, the RFQ message is distributed throughout the system to other trader terminals as an RFQ message at step 36. The system then determines whether any responses to the RFQ are made which match the RFQ. This check is in time priority order, thus at step 38 the first response is checked. If this matches, then a deal match process 42 is undertaken and the parties notified that the deal is done. If the first response does not match, then the next response in time is checked at step 40. This process continues until a match is found or a system defined time period elapses. The defined time period may be system wide or user defined so that the requester can define how long the request remains available in the system. As soon as a response is determined not to match, a response match process 44 for that unmatched response is commenced as described later. This may involve, for example, attempting to match the unmatched response with other responses.

The key points in the first mechanism are that the trader terminal submitting the RFQ must provide a price within a given sensible range and will be committed to deal at that price or better. Any RFQ with a price outside the given range will be rejected.

It will be appreciated from figure 3 that the best offer is not necessarily the offer that is dealt. The system operates on a time priority so that the first offer to meet the price requirements will be dealt even if a subsequent response is received offering to deal at a more favourable price.

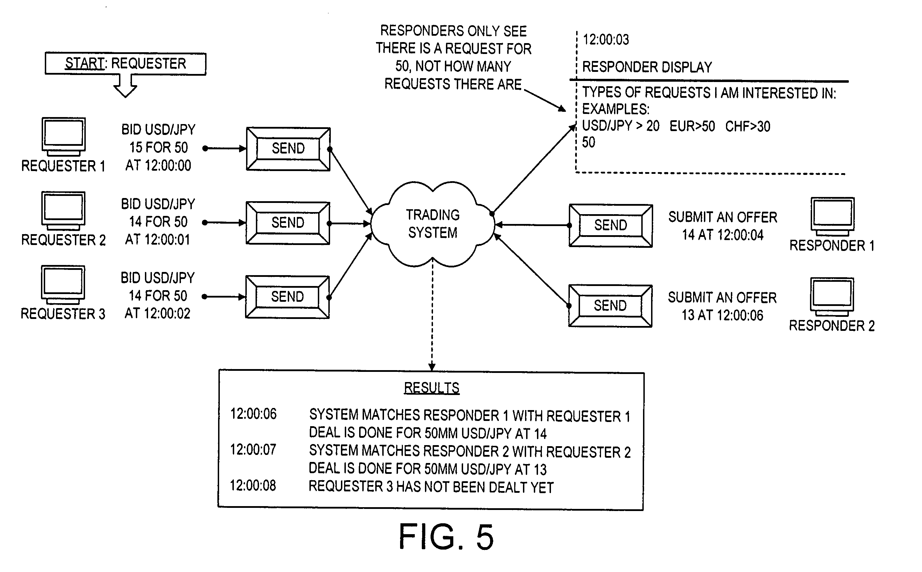

A second mechanism in the embodiment of the invention is shown in Figure 5. The system comprises order input devices 16, 18 and the trading network 14 as before. For convenience, in the remainder of this description, order input devices will be referred to as trader terminals although it will be understood that these may be automated trading interfaces. In this mechanism, requests for quotes (RFQs) are matched with quotes on a time priority basis. A RFQ 20 is submitted by a trader terminal 16 (requester) and is transmitted to the trading network 14. In this case, 3 traders have elected to submit RFQs specifying an amount and price. A time stamp is applied to the orders indicating the time at which they were submitted and this is included in the RFQ message. The RFQs messages are transmitted to and displayed at trader terminals 18 with which the requester has sufficient credit on a bilateral basis. The potential responders 18 may choose whether or not to respond as before. In this case, two traders submit responses with the prices and times indicated.

The matching of RFQs and quotes in this aspect follow certain rules. A request for quote message is matched with the first equal or better price submitted in a response message. The requester gets the benefit of the better price (i.e. if the quote is for a better price than the requester specified in the RFQ, the deal is done at that better price). A bid or offer is good until: (1) a deal is completed or (2) a dealer hits "off' and 5 seconds have elapsed from the time of submission.

Preferably, the time stamp is applied at the trader terminal when the order is submitted, although it may be applied at some other point in the system, for example when the order is received at the trading system from the trader terminal. What is important is that the time stamp is applied at the same point for each order so that orders from all trader terminals are dealt with in the same way.

In the example of Figure 5, the time priority order is from top to bottom, so that requester 1 submitted before requester 2 and so on. The timings given are examples. Requester 1 submits an RFQ "Bid USD/JPY 15 for 50" meaning a wish to buy 50 million USD worth of JPY at a price better than or equal to 110.15 (the big figure 110 being assumed). Responder 1 submits an offer for "14" first. This is a better price than the requester has specified and so a match is made at a price "14" (i.e. 110.14). A second requester 2 submits a request "Bid USD/JPY 14 for 50" after the first requester and a responder 2 submits a response offer for "13" after the first responder. These also match and a deal is done at "13". The second requester thus obtained a better price fortuitously because of the time priority.

The second mechanism has the key points (also described in relation to the first mechanism) that matches are made on a time then price priority, provided that the price is within an acceptable range. This is unlike existing systems, which match on price then time. The process is as shown in Figure 4.

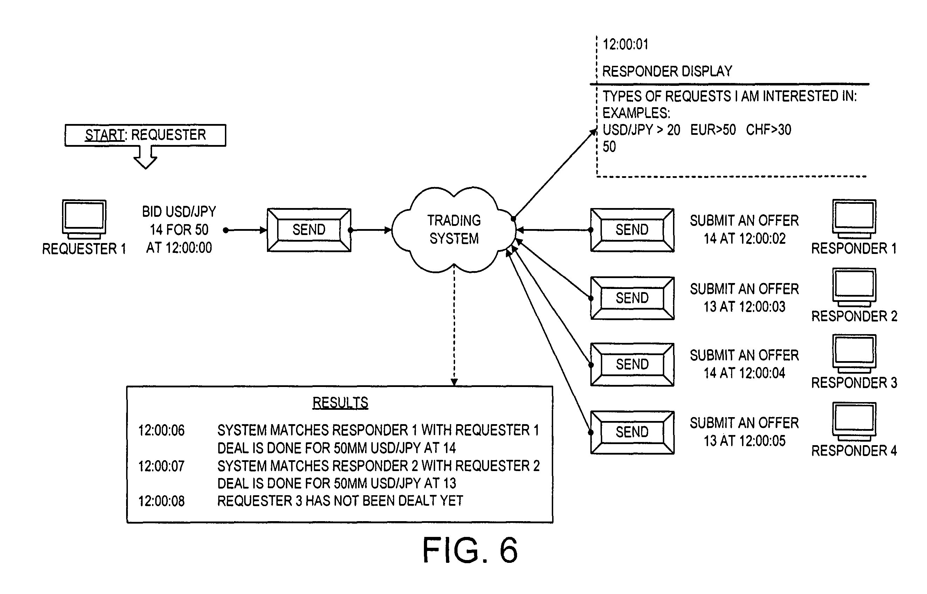

The third mechanism is shown in Figure 6 and comprises the same features as previously described. In this mechanism (briefly mentioned earlier), response Quote Submit messages generated by trader terminals responding to a request for quote are matched with one another. This is in contrast to known systems in which quotes (bid or offer) are usually only matched with hits (sell or buy).

A trader terminal 16 (requester 1) generates a request for quote 20 transmitted as RFQ message 24 through network 14 to potential counterparty trader terminals 18. In response, the potential counterparties may choose to submit quotes (whether bid or offer). In this case, two offers and two bids are submitted, but only one offer (responder 1) can match the RFQ and the deal is done. This leaves an offer and two bids pending in the system, which is then matched as far as possible. In this case, responder 2 and 3 match.

The time priority rule of aspect 2 is applied so that responder 1 submitted a quote first and so matches the requester. The subsequent responders 2 and 3 do not match the RFQ (because a match was already done) but can match each other because they are on opposite sides.

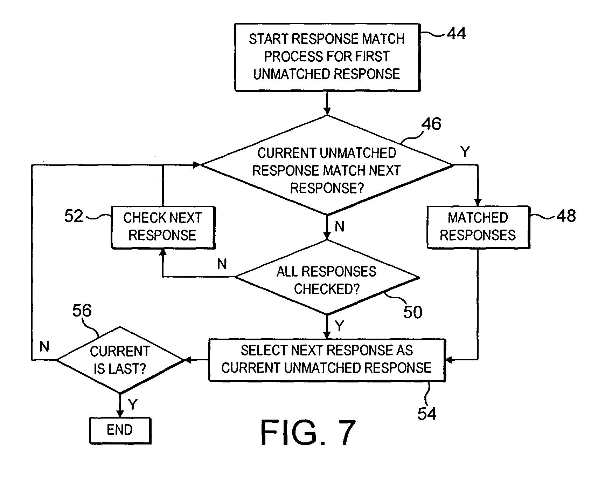

The process is shown in Figure 7, first the start response match process is initiated at step 44. Next, the first response that has not matched the RFQ is checked at step 46 to determine whether this can match the next response. If yes, then the responses are matched and a deal done at step 48. If not, then the next response in time is checked against the first response and this loop repeats. This is by first checking at step 50 whether all responses have been checked. If not, then the current response is checked against the next in time order at step 52. If all responses have been checked against the current response, then the process moves to check the next response in time against each subsequent response in time at step 54. If no response matches the last unmatched response at step 56 then the process ends. Othenrvise, the process repeats to check each unmatched response against the next in turn.

Any responses not matched in accordance with the third mechanism described above, can be converted to visible quote messages and transmitted throughout the system as quote messages. This feature ay be optional and a trader designates at the time of submitting a response to an RFQ whether they are willing for the response to be converted to a quote.

The fourth mechanism operates in a similar manner to the third mechanism only request for quote messages are matched with one another where no matching quote is submitted.

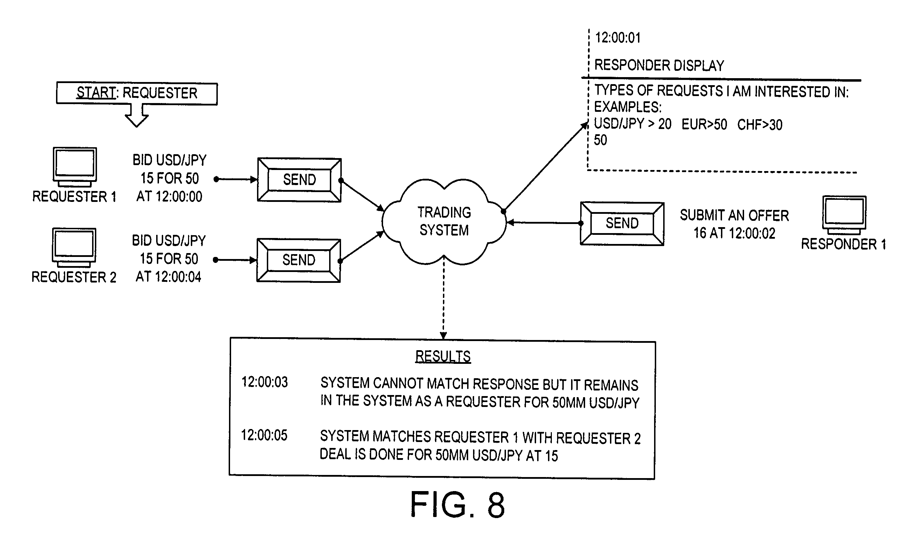

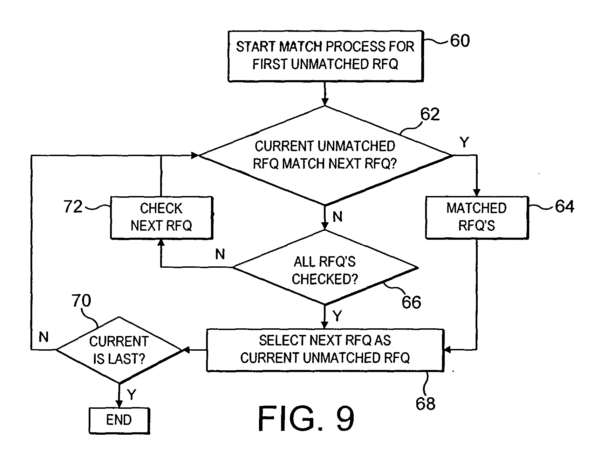

In this example, shown in Figure 8, two trader terminals generate RFQs 20 sent as messages 24 to the trading network 14. A trader terminal 18 (responder 1) chooses to submit a response sent as Quote Submit message 26 to the network 14. However, the price is incompatible with the RFQ prices. The two RFQ messages 24, though, are compatible as one is a bid, and the other an offer. Accordingly, these are matched together and a deal done. This process is shown in Figure 9.

It will be appreciated that the embodiments of the invention described have the advantage of providing a system in which RFQs may be submitted into an anonymous trading system in a manner which prevents speculative quotes and so overloads the system and lures unsuspecting counterparties to give up valuable market information. The system requires a party submitting an RFQ to specify an acceptable price at which he will trade and commits the trader to the trade is a match is made. Embodiments of the invention are particularly advantageous to traders who wish to submit large orders into the market. In a conventional anonymous trading system, even if subdivided into a number of separate orders, the dealing of a very large amount is likely, merely by its presence in the market, to cause the market to move, which may be to the detriment of the trader wishing to trade the amount. Embodiments of the present invention avoid this disadvantage.

In the embodiments described, the party submitting the RFQ also includes a buy or sell price which is communicated to the system but not to other trader terminals. In a further embodiments of the invention, not shown, the RFQ may be accompanied by both a buy and a sell price. As with the previous embodiment, these prices must be within the given range. However, the trader submitting the RFQ is not obliged to trade on both sides (buy and sell) if both buy and sell responses are received from other traders. Instead, the trader submitting the quote may choose to aither accept a buy response, a sell response, or even both. However, the trader must accept at least one side if that side is a good as or better than the price submitted by the trader on that side. This enables traders to deal on the side of the order that, in their judgement, gives them the best chance of making a profit.

As with the embodiments described above, the bids and offers that are matched with the order behind the RFQ are not necessarily the best prices that are submitted but the first order that is as good as or better than the price submitted with the RFQ to the system.
In a further embodiment of the invention, the prices from a number of responders may be aggregated such that the aggregate amount of several orders fills the amount specified in the RFQ. In this situation, the prices dealt with the parties contibuting to the aggregation may be different providing they each are at least good enough to be dealt.

In a still further embodiment, rather than matching on a time - price priority, the system may wait for a determined period of time, say 5 seconds, and then match the best response bid or offer that has been submitted in that time, provided it is at least as good as the price specified with the RFQ. In the case where two or more orders are received at the same price within the time period, the match may be made with the first received at that price. Alternatively or additionally, the matching rules may take into account the size of the potentially matching orders so that of two orders at the same price, the one that fills the RFQ amount will be matched even if it was received later. If all orders at the best price fully fill the RFQ amount, then time priority may again be used to decide which order to match.

Many other modifications to the embodiments described are possible and will occur to those skilled in the art without departing from the scope of the invention which is defined by the following claims.

## Claims

1. An anonymous computerised trading system for trading products, comprising a trading network arranged to receive inputs from order input devices; the order input devices being arranged to generate request for quote (RFQ) messages including price and amount of a product for anonymous transmission; the trading network being arranged only to distribute RFQ messages which specify a price within a given range,

2. A trading system according to claim 1, wherein the range is defined by a difference from a system defined price.

3. An anonymous computer trading system according to claim 2, wherein the system defined price is the best price currently available in the system for the product to be traded.

4. A trading system according to claim 2, wherein the system defined price is a time averaged price for matches made for the product to be traded.

5. A trading system according to any of claims 1 to 4, wherein the order input devices are arranged to prevent RFQ messages from being transmitted to the trading network which specify a price outside the given range.

6. A trading system according to any of claims 1 to 5, wherein the trading network is arranged to prevent transmission of RFQ messages which specify a price outside the given range.

7. An anonymous computer trading system according to any preceding claim, wherein RFQ messages specifying a price within the given range are committed to be matched at the price specified or better.

8. A trading system according to any preceding claim, wherein the order input devices are arranged to generate response messages in response to a distributed RFQ message, the response messages being transmitted by the trading network to the order input device which generated the RFQ message.

9. A trading system for trading products, comprising a trading network arranged to receive order inputs from order input devices, the order input devices being arranged to generate request for quote (RFQ) messages specifying price and amount of a product to be traded for anonymous transmission; the order input devices being arranged to generate response messages in response to a received RFQ message, the response messages specifying a price, and the trading network being arranged to match RFQ messages with response messages in time priority order such that the first compatible response matches the request for quote.

10. A trading system for trading products, comprising a trading network arranged to receive inputs from order input devices; the order input devices being arranged to generate request for quote (RFQ)messages specifying price and amount of a product for anonymous transmission; the order input devices being arranged to generate response messages in response to an RFQ message, the response messages specifying a price and amount; the trading network being arranged to match the RFQ message with a compatible response message leaving unmatched response messages; the trading network being further arranged to match unmatched response messages submitted in response to a request for quote with one another.

11. An anonymous computer trading system for trading products, comprising a trading network arranged to receive inputs from order input devices; the order input devices being arranged to generate request for quote (RFQ) messages specifying price and amount of a product to be traded; the trading network being arranged to match request compatible RFQ messages with one another to which no matching response is made.

12. A trading system according to any preceding claim, wherein the RFQs generated by the order input devices and transmitted to the system include price and amount of the product to be traded, and the RFQs are distributed by the system to potential counterparties without the price submitted by the order input device.

13. A trading system according to claim 12, wherein the price transmitted to the system comprises a buy price and a sell price.

14. A trading system according to any of claims 1 to 8, wherein the system is arranged to match RFQ messages with the best priced responder order submitted within a given time period

15. A trading system according to any preceding claim, wherein the product to be traded is a financial instrument.
